# EUROPEAN PATENT SPECIFICATION

(11) **EP 3 908 051 B1**
(45) Date of publication and mention of the grant of the patent: **13.08.2025**
(21) Application number: 20202748.8
(22) Date of filing: 20.10.2020
(51) Int. Cl.: H04W 64/00

(54) **SERVER, COMMUNICATION SYSTEM, AND POSITIONING METHOD BASED ON MOBILE NETWORK THEREOF**
SERVER, KOMMUNIKATIONSSYSTEM UND POSITIONIERUNGSVERFAHREN BASIEREND AUF EINEM MOBILEN NETZWERK DAVON
SERVEUR, SYSTÈME DE COMMUNICATION ET PROCÉDÉ DE POSITIONNEMENT BASÉ SUR UN RÉSEAU MOBILE CORRESPONDANT

(30) Priority: 04.05.2020 US 202016866537
(43) Date of publication of application: 10.11.2021
(73) Proprietor: Groundhog Inc., Taipei City 104 (TW)
(72) Inventor: CHIOU, Ta-Gang, Taipei (TW); LIN, I-Hung, Taipei (TW)
(74) Representative: Carstens, Dirk Wilhelm

(56) References cited:
- EP-A1- 2 640 116
- US-A1- 2003 125 046
- US-A1- 2004 266 457
- US-A1- 2010 309 051
- US-A1- 2012 113 837
- US-A1- 2012 135 729
- US-B1- 9 820 255

## Description

### TECHNICAL FIELD

The present disclosure generally relates to a positioning method, in particular, to a server, a communication system, and a positioning method based on mobile network thereof.

### BACKGROUND

Nowadays, almost everyone has an Internet connectable device (such as mobile phone, tablet, laptop, etc.), and the device may connect to the Internet through mobile networks (i.e., mobile networks). There are many mobile network operators (MNOs) in each country. MNO would always like to understand its competitors' network performance (coverage in terms of signal strength and signal quality) to evaluate its competitiveness. The conventional way is to use a mobile phone equipped with the SIM card relating to different MNOs when performaing drive test.

Geolocation methodology can reduce drive test by using Measurement Reports in the OSS call trace. With specific procedures as claimed in our previous application, it can support to monitor the network performance of competitor MNOs.
Attention is drawn to EP 2 640 116 A1 describing a method and an apparatus for calibrating a coverage database comprising: transmitting a measurement control message to terminals in a network coverage area, wherein the measurement control message is used to instruct a terminal supporting Global Position System (GPS) to include geographical position information for current position of the terminal in a measurement report to be reported; receiving the measurement report transmitted by the terminal; storing signal strengths of signals received from respective cells by the terminal and the geographical position information for the terminal into the coverage database, if the measurement report includes the signal strengths and the geographical position information. The technical solutions may improve the positioning precision, reduce time and cost spent on calibration, and thus facilitate popularization and application of the positioning technology.
Further attention is drawn to US 2003/125046 A1 describing in a wireless communication network, base station antenna positions and time offsets are stored in a base station almanac data base along with other information used for obtaining the most reliable mobile station position fixes under a variety of conditions. The system uses the position fixes of mobile stations and terrestrial ranging information to determine base station antenna positions and base station timing offsets. The base station antenna positions are determined during normal mobile station position determinations, in order to maintain and improve the antenna location data, and to correct for change or relocation of the base station antennas. It is possible to recover quickly from a loss of cell sector identity during relocation of a base station antenna, and to ensure accuracy of mobile station position determination based on ranging from the base stations, and rapid acquisition of position data from mobile stations having global satellite receivers.
Attention is further drawn to US 9 820 255 B1 describing methods, systems, and computer-readable media for verifying geolocation data provided with an electronic content request received from a mobile device. One method includes: receiving, over a network, a content request including a unique identifier and geolocation data; determining a unique device identifier of a mobile device based on the received unique identifier; transmit, over the network, a verification request that requests geolocation data of the mobile device, the verification request including the unique identifier of the mobile device; receiving, over the network, verified geolocation data of the mobile device in response to the transmitted verification request; verifying the geolocation data included with the content request based on the verified geolocation data; and transmitting, over the network, a verification result.
Further attention is drawn to US 2012/113837 A1 describing methods and arrangements for reporting of measurements in a wireless communication system. The examples relate to methods and arrangements exercising automated collection of network performance statistics as an alternative to drive tests and reporting function called Minimizing Drive Tests (MDT). The described examples for reporting of measurements in a wireless communication system include acquiring suitable confidence information.

### SUMMARY OF THE DISCLOSURE

The present invention is set forth in the independent claims, respectively. Preferred embodiments of the invention are described in the dependent claims.

Accordingly, the present disclosure is directed to a server, a communication system, and a positioning method based on the mobile network thereof, and the positioning result based on the mobile network would be corrected with satellite positioning system.

In one of the exemplary aspects, a server includes, but not limited to, a communication transceiver and a processor. The communication transceiver is used for transmitting and receiving signals. The processor is coupled to the communication transceiver. The processor is configured to receive a first measurement report through the communication transceiver, receive a second measurement report through the communication transceiver, determine second location information of a user equipment (UE) according to a monitoring result obtained from the second measurement report, and calibaratethe second location information according to the first location information. The first measurement report is related to a first network performance measurement of the UE with at least one mobile network, and the first measurement report includes the first location information of the UE. The second measurement report is related to a second network performance measurement of the UE with the mobile network. The monitoring result is related to the signal transmission condition of the UE in the one mobile network.

In one of the exemplary aspects, a positioning method based on mobile network includes, but not limited to, the following steps. A first measurement report is received. The first measurement report is related to a first network performance measurement of a UE with at least one mobile network, and the first measurement report includes the first location information of the UE. A second measurement report is received. The second measurement report is related to a second network performance measurement of the UE with the at least one mobile network. The second location information of the UE is determined according to a monitoring result obtained from the second measurement report. The monitoring result is related to the signal transmission condition of the UE in the mobile network. The second location information is calibrated according to the first location information.

In one of the exemplary aspects, a communication system includes, but not limited to, a UE and a server. The UE transmits a first measurement report and transmits a second measurement report. The first measurement report is related to a first network performance measurement of a UE with one or more mobile networks, and the first measurement report includes the first location information of the UE. The second measurement report is related to a second network performance measurement of the UE with the mobile network. The server determines the second location information of the UE according to a monitoring result obtained from the second measurement report and calibrates the second location information according to the first location information. The monitoring result is related to the signal transmission condition of the UE in the mobile network.

In light of the foregoing, according to the server, the communication system, and the positioning method based on mobile network thereof provided in one or more aspects, the first location information included in the first measurement report would be used for calibrating the second location information which is estimated based on monitoring result of the signal transmission condition. Accordingly, the positioning accuracy of the second location information may be improved, so as to further provide more reliable network performance measurement.

In light of the foregoing an easier way to improve the accuracy of the positioning is provided, so as to enhance the reliability of the network performance measurement.

### BRIEF DESCRIPTION OF THE DRAWINGS

The accompanying drawings are included to provide a further understanding of the disclosure, and are incorporated in and constitute a part of this specification. The drawings illustrate aspects of the disclosure and, together with the description, serve to explain the principles of the disclosure.
FIG. 1 is a schematic diagram of a communication system according to one of the exemplary aspects of the disclosure.
FIG. 2 is a flowchart illustrating a positioning method based on mobile network according to one of the exemplary aspects of the disclosure.
FIG. 3A is a schematic diagram illustrating the immediate minimization of drive test (MDT) according to one of the exemplary aspects of the disclosure.
FIG. 3B is a schematic diagram illustrating the logged MDT according to one of the exemplary aspects of the disclosure.
FIG. 4 is a schematic diagram illustrating frequency spectrum scanning according to one of the exemplary aspects of the disclosure.
FIG. 5 is a schematic diagram illustrating location information of two measurement reports according to one of the exemplary aspects of the disclosure.

### DESCRIPTION

Reference will now be made in detail to the present preferred aspects of the disclosure, examples of which are illustrated in the accompanying drawings. Wherever possible, the same reference numbers are used in the drawings and the description to refer to the same or like parts.

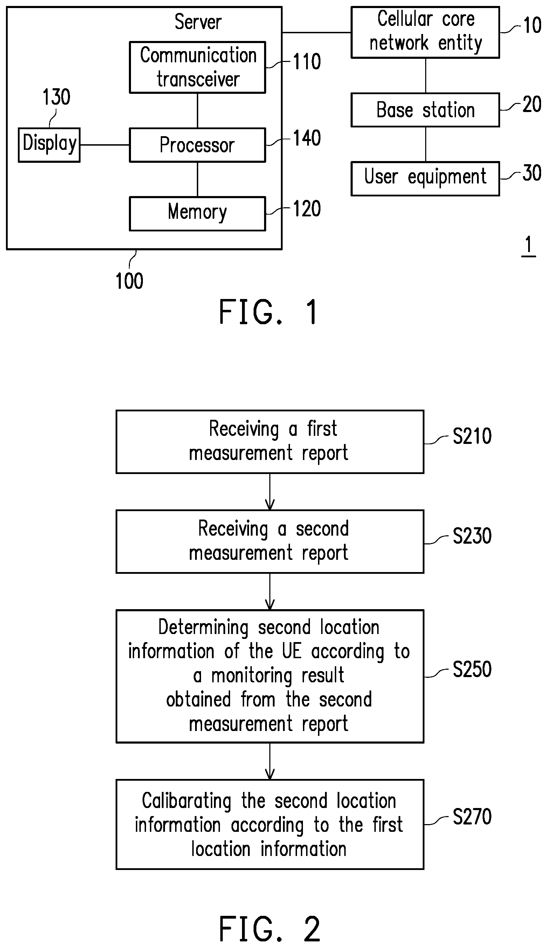

FIG. 1 is a schematic diagram of a communication system 1 according to one of the exemplary aspects of the disclosure. Referring to FIG. 1, the communication system 1 includes, but not limited to, one or more cellular core network entities 10, one or more base stations (BSs) 20, one or more user equipments (UEs) 30, and a server 100. It should be noticed that the numbers of the cellular core network entities 10, the BSs 20, and the UEs 30 may be determined based on actual situation.

The cellular core network entity 10, the BS 20, and the UE 30 are in one mobile network of one mobile network operator (MNO). The mobile network may be global system for mobile communications (GSM)/general packet radio service (GPRS)/ enhanced data rates for GSM evolution (EDGE) (i.e., second generation (2G) mobile network), code division multiple access (CDMA) 2000/evolution-data optimized (EVDO), universal mobile telecommunications system (UMTS)/high speed packet access (HSPA) (i.e., 3G mobile network), long term evolution (LTE), (long term evolution- advanced) LTE-A (i.e., 4G mobile network), 5G New Radio or further generation mobile networks.

For different generations of the mobile network, the cellular core network entity 10 and the BS 20 could be different. For example, regarding 3G and 4G networks, the cellular core network entity 10 could be a home subscribe server (HSS), or a mobility management entity (MME), and the BS 20 could be a home evolved node B (HeNB), eNB, an advanced base station (ABS), or a base transceiver system (BTS). Regarding for 5G network, the cellular core network entity 10 could be an authentication server function (AUSF), or an access and mobility management function (AMF), and the BS 20 could be gNodeB (gNB). Alternatively, the cellular core network entity 10 could be any sever in the core network. In the aspect of the disclosure, the cellular core network entity 10 may further operates an operation support system (OSS), a business support (BSS), or other operations, administration and maintenance (OAM) related platforms of the mobile network.

The UE 30 may have multiple implementations, for example, (but is not limited to) a mobile station, an advanced mobile station (AMS), a telephone device, a customer premise equipment (CPE), a wireless sensor, etc. In oneaspect, the UE 30 may be equipped with one or more physical subscriber smart cards (such as a subscriber identity module (SIM), a removable user identity module (RUIM), a universal integrated circuit card (UICC), etc.) or embedded SIM (eSIM), which is/are allowed to register to it own subscribed mobile network(s) but not allowed to register to the other mobile networks (i.e., non-subscribed mobile networks) except for roaming.

The server 100 may be a desktop computer, a laptop, a smartphone, a tablet, a network host, or any computing device. In some aspects, the server 100 may be one of the cellular core network entity 10. The server 100 may include, but not limited to, a communication transceiver 110, a memory 120, a display 130, and a processor 140.

The communication transceiver 110 could be a communication interface (such as universal serial bus (USB), universal asynchronous receiver/transmitter (UART), RJ45, etc.) or a wireless transceiver (such as UMTS, LTE, 5G New Radio, Wi-Fi, Bluetooth, etc.). The communication transceiver 110 is used to transmit/receive signals to/from the cellular core network entity 10.

The memory 120 could be any type of a fixed or movable random access memory (RAM), a read-only memory (ROM), a flash memory or a similar device or a combination of the above devices. The memory 120 records program codes, network configurations, frequency spectrum information, measurement reports, location information, codebooks, buffer data or permanent data, which would be introduced later.

The display 130 could be liquid-crystal display (LCD), light-emitting diode (LED), organic light-emitting diode (OLED), or other displays.

The processor 140 is coupled to the communication transceiver 110, the memory 120 and the display 130. The processor 140 is configured to process digital signals, executes a procedure of the exemplary aspect of the disclosure, and is adapted to access or load the data and software modules recorded by the memory 120. Functions of the processor 140 may be implemented by using a programmable unit such as a central processing unit (CPU), a microprocessor, a microcontroller, a digital signal processing (DSP) chip, a field programmable gate array (FPGA), etc. The functions of the processor 140 may also be implemented by an independent electronic device or an integrated circuit (IC), and operations of the processor 140 may also be implemented by software.

In the aspect of the disclosure, the processor 140 may handle operations, administration, and maintenance (OAM) functions for the mobile network, such as 3G, 4G, 5G, or further generation. For example, the processor 140 can handle signaling and message of billing and operational support systems (BOSS)/operation support system (OSS) for 3G core network. The processor 140 may further establish communications through the communication transceiver 110 with the cellular core network entity 10 to transmit or receive data or message with each other.

In order to fully convey the disclosure to those skilled in the art, several aspects are provided below for further descriptions. In the following content, the method of the aspect of the disclosure is described with reference of various devices in the communication system 1. Various steps of the method of the aspect of the disclosure may be adjusted according to an actual implementation, and are not limited by the disclosure.

FIG. 2 is a flowchart illustrating a positioning method based on mobile network according to one of the exemplary aspects of the disclosure. Referring to FIG.2, the processor 140 of the sever 100 may receive a first measurement report through the communication transceiver 110 (step S210). Specifically, the first measurement report is related to a network performance measurement of the UE 30 with one or more mobile networks. The network performance measurement could be a measurement report process, which is used to measure signal strength, signal quality, signal to noise/ interference ratio, etc. For example, reference signal received power (RSRP), reference signal received quality (RSRQ), and signal-to-interference-plus-noise ratio (SINR) with corresponding cell's physical cell identity (PCI) are reported in the measurement report for given reference signal with a specific carrier frequency. Besides the monitoring results (such as RSRP, RSRQ, etc.) directly from measurement report, the combination of the monitoring results may be converted into other results by using any form of formula. For example, the received signal strength indication (RSSI) can be derived by RSRP and RSRQ. In addition, the processor 140 may take the RSRP/RSRQ into a formula to generate new results for other network quality indicators. The UE 30 may scan all frequency spectrums listed in the frequency spectrum information, which is requested by BS 20, to obtain corresponding monitoring result. It should be noticed that, the content of network performance measurement could be different for different generation mobile networks. In addition, the network performance measurement process can be either event-triggered or set as periodical. For example, in the case of event-triggered measurement, a threshold/offset would be configured properly in order to collect the required number of measurement reports. For another example, in the case of periodical measurement, the measurement report process may be performed according to one or more specific periods. After the first measurement report is transmitted by the UE 30, the server 100 may receive the first measurement report or the monitoring result from the first measurement report via the BS 20 and the cellular core network entity 10.

In oneaspect, the network performance measurement is the minimization of drive test (MDT) introduced in one release the third-generation partnership project (3GPP). In the mechanism of the MDT, an MNO may be able to configure the measurement report process of the UE 30 through network configuration, and the UE 30 will send measurement reports accordingly with latitude and longitude coordinates.

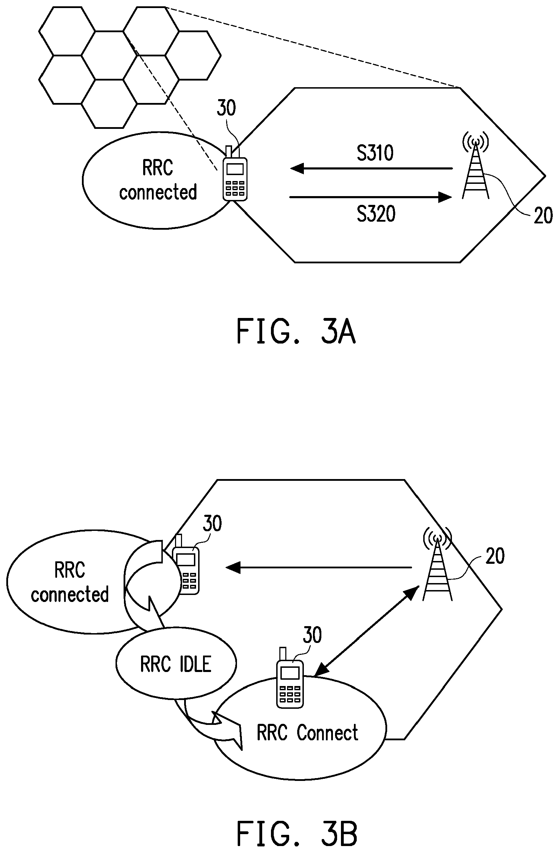

FIG. 3A is a schematic diagram illustrating the immediate MDT according to one of the exemplary aspects of the disclosure. Referring to FIG. 3A, the BS 20 transmits a network configuration of MDT to the UE 30 (step S310), and the UE 30 may feedback measurement reports based on the network configuration (step 320). It should be noted that the immediate MDT involves measurement performance by UE in the CONNECTED state (such as radio resource control (RRC) CONNECTED state or another state that UE 30 may perform user data transmission with the BS 20) and reporting of the measurements to BS 20 available at the time of reporting condition (such as the period of the measurement report process).

FIG. 3B is a schematic diagram illustrating the logged MDT according to one of the exemplary aspects of the disclosure. Referring to FIG. 3B, the difference from the immediate MDT is that the logged MDT may involve measurement performance by the UE 30 in IDLE state (such as RRC IDLE state or another state that UE 30 may merely receive control signaling from the BS 20) at points in time when configured conditions (such as a specific event or a specific period) are satisfied, one or more measurement logs in the storage of UE 30 would be reported to the BS 20 at a later point when the UE 30 is operated in CONNECTED state.

It should be noted that the first measurement report may further include the first location information of the UE 30. In oneaspect, the first location information is obtained based on the satellite positioning operation of the UE 30. The satellite positioning operation may be operated based on global positioning system (GPS), Galileo satellite system, global navigation satellite system (GLONASS), BeiDou Navigation Satellite System, or other global navigation satellite system (GNSS). The first location information may be latitude and longitude coordinates or a relative location corresponding to one or more specific landmarks. The UE 30 may report the first measurement report which includes the first location information based on satellite positioning operation to the BS 20.

In oneaspect, the processor 140 may configure a network configuration of the first network performance measurement. It means that the network performance measurement may be requested by the server 100. In oneaspect, the network configuration may include a command to enable the satellite positioning operation of the UE 30, and the network configuration is used by the cellular core network entity 10. Therefore, the first location information could be obtained based on the satellite positioning operation of the UE 30. The network configuration may be an OSS/BSS configuration which can be configured in the cellular core network entity 10. For example, the processor 140 may configure OSS/BSS operated on the cellular core network entity 10 by using batch scripts, so as to transmit the network configuration through the communication transceiver 110. The batch scripts record commands can be implemented in the OSS/BSS according to network configuration. Then, the OSS/BSS operated on the cellular core network entity 10 would execute an instruction indicated in the network configuration towards BS 20. The instruction is, for example, to request the BS 20 to transmit control message (such as RRC messages) of the network performance measurement (such as MDT or other measurements). Taking the network configuration of immediate MDT as an example, in a RRC reconfiguration message, the trigger type could be periodical (i.e., a periodical measurement report process), the maximum report cells could be 4, the report interval could be 10 seconds, the reported amount could be 16, and the location information included indicator (e.g., the aforementioned command of satellite positioning operation) set as true. It should be noticed that the values in the example is merely used for exemplary description, and these values could be modified based on actual requirement. Then, the measurement report may include, for example, RSRPs corresponding to four BSs 20 with the GNSS coordinates of the UE 30.

Furthermore, to monitor the network performance of nearby mobile networks, such as competitors' and domestic roaming partners' networks in large spatial and temporal scale, by utilizing UE capabilities in line with 3GPP standard. One capability of the aspect is the full spectrum scan or desired spectrum scan capability of the UE 30. The UE 30 is designed to scan a frequency spectrum including multiple carrier frequencies depending on its capability of the chipset. Although only the subscriber smart card or eSIM provided and activated by operator will allow the UE 30 to pass authorization process and register to its own mobile network (which corresponds to one frequency spectrum), the UE 30 may keep measuring the neighboring cells in specific carrier frequencies (which corresponds to other frequency spectrums) configured by OSS.

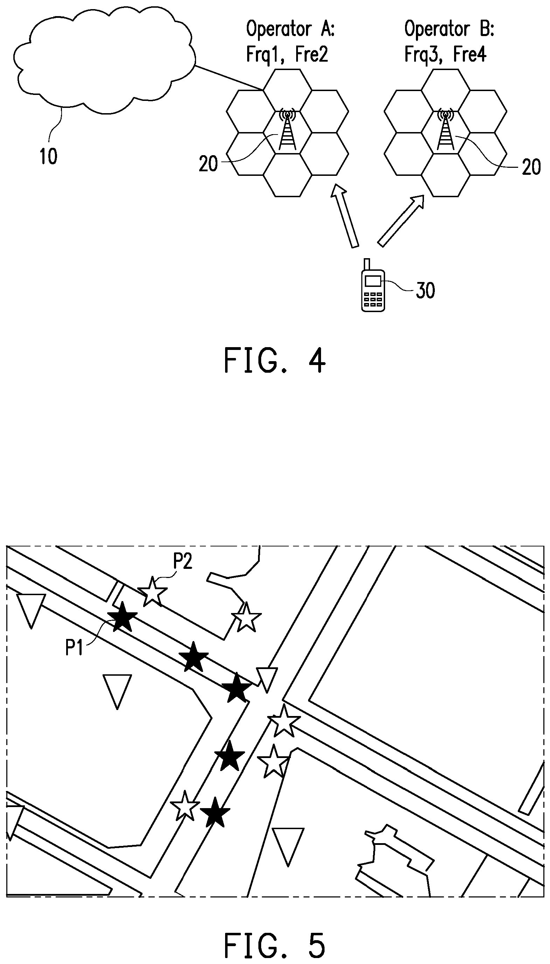

FIG. 4 is a schematic diagram illustrating frequency spectrum scanning according to one of the exemplary aspects of the disclosure. Referring to Fig. 4, the operator A uses carrier frequencies Freq1 and Freq2 while operator B uses carrier frequencies Freq3 and Freq4. However, operator A can mandate the UE 30 of its subscriber to measure all carrier frequencies Freq1, Freq2, Freq3, and Freq4 by proper OSS configuration. In this way, the frequency bands Freq3 and Freq4 which belong to the operator B can be monitored and used for later analysis,

In oneaspect, the processor 140 may further configure the network configuration to include frequency spectrum information. The frequency spectrum information includes multiple frequency spectrums possessed by two or more mobile networks. The mobile networks include one mobile network of the communication system 1 and at least one other mobile network different from the mobile network of the communication system 1. The frequency spectrums of two mobile networks would be different. The carrier frequencies in the frequency spectrums of two mobile networks are not be overlapped. For example, a first frequency spectrum of one mobile network includes carrier frequencies 2110~2125 MHz and 1830~1850 MHz, and a second frequency spectrum of another mobile network includes carrier frequencies 2150~2170 MHz and 1820~1830 MHz. The frequency spectrum information would record a list of carrier frequencies and allowed bandwidth for each frequency spectrum. For example, the frequency spectrum information includes 1710~1725 MHz of carrier frequencies with 15 MHz bandwidth of one mobile network and 1725~1735 MHz of carrier frequencies with 10 MHz bandwidth of another mobile network. Then, the frequency spectrums of the network configuration would be scanned for the network performance measurement of the UE 30, and the frequency spectrum information may include frequency spectrum of competitor network.

It should be noted that the frequency spectrum could be one or more licensed frequency bands in a region or one or more supported frequency bands of the UE 30 (which may be conveyed by UE capability information).

The processor 140 of the server 100 may receive a second measurement report through the communication transceiver 110 (step S230). Specifically, the second measurement report is related to another network performance measurement of the UE with one or more mobile networks. The difference between the first and second measurement reports is that the second measurement report does not include the GNSS location information of UE 30. The network performance measurement corresponding to the second measurement report may be a normal measurement report process or an MDT without reporting GNSS location information. The network configuraton may indicate that the UE 30 needs not or disables to report its GNSS capability in the second measurement report. Taking the network configuration of immediate MDT as an example, in a RRC reconfiguration message, the location information included indicator (e.g., the aforementioned command of satellite positioning operation) could be false. However, the network performance measurement, the other parameters of the network configuraton, and the frequency spectrum information corresponding to the second measurement report may be the same or similar to the first measurement report, and the description thereof would be omitted.

Then, the processor 140 of the server 100 may calculate the second location information of the UE 30 according to a monitoring result obtained from the second measurement report (step S250). Specifically, there are several positioning algorithms including triangulation, tri-lateration, and TDOA (Time Difference Of Arrival), which can be applied to geo-locate the monitoring results (corresponding to the location of UE 30) collected in the OSS. The monitoring result is related to signal transmission condition (such as signal strength, channel quality, encoding manner, etc.) of the UE 30 in one or more mobile networks. For example, the monitoring results could be RSRP, RSRQ, etc. The signal strength of the monitoring result may be used for the triangulation, trilateration, or other positioning algorithms. For example, the server 100 builds in the actual geographical information (such as latitude and longitude, direction, tilt, and etc.) of three BSs 20 and mutiple corresponding signal strengths of the UE 30 relative to the three BSs 20, and the server 100 may calculate the location information of the UE 30 by positioning algorithms. The second location information could be this geographical information.

In oneaspect, the processor 140 may correlate signal strengths of the monitoring result of the first measurement report corresponding one or more BSs 20 with the first location information, respectively, to generate location reference information. It is assumed the accuracy of first location information providing GNSS is better than the second location information. On the other hand, the signal strength is related to relative distance or relative location. The location reference information represents the signal strengths from one or more BSs 20 may be measured at the location recorded in the first location information. Then, the processor 140 may compare the monitoring result of the second measurement report with the location reference information to determine the second location information of the UE 30. For example, the processor 140 may search corresponding cell identity recorded in the second measurement report from the location reference information, and compare their RSSIs of the same cell identity between the second measurement report and the location reference information, so as to determine the second location information based on the compared result and the first location information.

Then, the processor 140 of the server 100 may calibrate the second location information according to the first location information (step S270). Specifically, in order to improve the accuracy of the second location information, and second location information should be modified based on a more accurate positioning mechanism. The satellite positioning mechanism is used in theaspect. FIG. 5 is a schematic diagram illustrating location information of two measurement reports according to one of the exemplary aspects of the disclosure. Referring to FIG. 5, the black star sign represents the first location information P1, and the white star sign represents the second location information P2. It is assumed that a user holds the UE 30 and walks on the roads. The trajectory of the UE 30 based on the first location information P1 may be located on the roads. However, the trajectory of the UE 30 based on the second location information P2 may not be located on the roads, so that the second location information P2 maybe not reliable.

It should be noted that the first and second measurement reports may be linked with the timestamps, which represents the time when the UE 30 performs the network performance measurement. In one embodiment, the processor 140 compares time information between the first location information and the second location information of the UE 30 and use the first location information with matched time or closest time information to modify the second location information. The time information could be the aforementioned timestamp or other time indicator. If the times in the time information of the first and second measurement reports are the same, the processor 140 may replace the second location information with the corresponding first location information or use the weighted combination of the corresponding first and second location information as the modified second location information. Otherwise, the processor 140 may select one or more pieces of first location information having time information closer to the time information of the second location information. Then, the processor 140 may replace the second location information with the one piece of the selected first location information or use the weighted combination of the corresponding first and second location information as the modified second location information. Accordingly, the modified second location information may be more accurate.

After the second location information is corrected, the processor 150 may compare the monitoring results obtained from the first and second measurement reports of the mobile networks at locations corresponding to the first location information and corrected second location information. Location information can make the comparison more useful because measured performance in the same geographical area can be compared together. Therefore, how to associate collected competitor monitoring results with geographical information is an important part of the aspect of the disclosure. On the basis of the first and calibrated second location information, by comparing the monitoring results (such as signal strength and signal quality) of two or more mobile networks at the same geographical location, MNO can compare the network performance for benchmark purposes. In addition, a graphical user interface (GUI) with the monitoring result may be further presented on the display 130.

In summary, the exemplary aspects described above depicted the server, the communication system, and the positioning method based on the mobile network thereof. The satellite positioning mechanism is used in the network performance measurement of mobile networks. The positioning algorithm based on the monitoring result of the measurement report may be further calibrated according to the location information based on the satellite positioning mechanism. Addtionally, Minimization of Drive Test (MDT) is introduced by 3GPP and available in network. It provides GNSS coordinates (i.e. latitude and longtitude) in the Meaurement Reports which is usually accurate. In some aspects, it takes advantage of MDT to calibrate the geolocation potisioning results including the MNO itself and the competitors. Furthermore, associated these collected competitor networks' RF performance data with the location where these data are collected by the means the implementers preferred and gathered the associated competitor network data and accurate location information at the server, mobile operators can utilize these gathered competitor networks data and compare with their own network to learn about where they have better or worse performance as indication for their own network improvement tasks.

## Claims

1. A server (100), comprising:
a communication transceiver (110), configured for transmitting and receiving signals; and
a processor (140), coupled to the communication transceiver (110), and the processor (140) is configured for:
receiving, through the communication transceiver (110), a first measurement report, wherein the first measurement report is related to a first network performance measurement of a user equipment (30), named UE hereinafter, with at least one mobile network, and the first measurement report comprises a plurality pieces of first location information (P1) of the UE (30), and each of the plurality pieces of first location information (P1) has time information;
receiving, through the communication transceiver (110), a second measurement report, wherein the second measurement report is related to a second network performance measurement of the UE (30) with the at least one mobile network;
determining second location information (P2) of the UE (30) according to a monitoring result obtained from the second measurement report, wherein the second location information (P2) has time information, and the monitoring result is related to signal transmission condition of the UE (30) in the at least one mobile network; and
calibrating the second location information (P2) according to the first location information (P1),
wherein the processor (140) is configured for calibrating by:
comparing the time information of each of the plurality of pieces of first location information (P1) with the time information of the second location information (P2) of the UE (30); and
using the first location information (P1) with matched time or closest time information to modify the second location information (P2).

2. The server (100) according to claim 1, wherein the processor (140) is configured for:
configuring a network configuration of the first network performance measurement, wherein the network configuration comprises a command to enable satellite positioning operation of the UE (30), the first location information (P1) is obtained based on the satellite positioning operation, the first network performance measurement is minimization of drive test of third-generation partnership project, and the network configuration is used by a cellular core network entity; and
transmitting, through the communication transceiver (110), the network configuration.

3. The server (100) according to claim 2, wherein the network configuration further comprises frequency spectrum information, the frequency spectrum information comprises a plurality of frequency spectrums possessed by at least two mobile networks, the frequency spectrums are scanned for the second network performance measurement of the UE (30), and the UE (30) is allowed to register to at least one of its own subscribed mobile network of the at least two mobile networks.

4. The server (100) according to claim 3, wherein the processor (140) is configured for:
comparing the monitoring results obtained from the first and second measurement reports of the mobile networks at locations corresponding to the first location information (P1) and calibrated second location information (P2).

5. The server (100) according to claim 1, wherein the processor (140) is configured for:
correlating signal strengths of the monitoring result of the first measurement report corresponding base stations with the first location information (P1), respectively, to generate location reference information; and
comparing the monitoring result of the second measurement report with the location reference information to determine the second location information (P2) of the UE (30).

6. A positioning method performed by a server, the positioning method based on mobile network, **characterized by** comprising:
receiving, a first measurement report, wherein the first measurement report is related to a first network performance measurement of a user equipment (30), named UE hereinafter, with at least one mobile network, and the first measurement report comprises a plurality pieces of first location information (P1) of the UE (30), and each of the plurality pieces of first location information (P1) has time information;
receiving a second measurement report, wherein the second measurement report is related to a second network performance measurement of the UE (30) with the at least one mobile network;
determining second location information (P2) of the UE (30) according to a monitoring result obtained from the second measurement report, wherein the second location information (P2) has time information, and the monitoring result is related to signal transmission condition of the UE (30) in the at least one mobile network; and
calibrating the second location information (P2) according to the first location information (P1),
wherein the step of calibrating the second location information (P2) according to the first location information (P1) comprises:
comparing the time information of the first location information (P1) with the time information of the second location information (P2) of the UE (30); and using the first location information (P1) with matched time or closest time information to modify the second location information (P2).

7. The positioning method based on mobile network according to claim 6, further comprising:
configuring a network configuration of the first network performance measurement, wherein the network configuration comprises a command to enable satellite positioning operation of the UE (30), the first location information (P1) is obtained based on the satellite positioning operation, the first network performance measurement is minimization of drive test of third generation partnership project, the network configuration is used by a cellular core network entity, the network configuration further comprises frequency spectrum information, the frequency spectrum information comprises a plurality of frequency spectrums possessed by at least two mobile networks, the frequency spectrums are scanned for the second network performance measurement of the UE (30), and the UE (30) is allowed to register to at least one of its own subscribed mobile network of the at least two mobile networks.

8. The positioning method based on mobile network according to claim 7, further comprising:
comparing the monitoring results obtained from the first and second measurement reports of the mobile networks at locations corresponding to the first location information (P1) and calibrated second location information (P2).

9. The positioning method based on mobile network according to claim 6, further comprising:
correlating signal strengths of the monitoring result of the first measurement report corresponding base stations with the first location information (P1), respectively, to generate location reference information, and wherein the step of determining the second location information (P2) of the UE (30) according to the monitoring result obtained from the second measurement report comprises:
comparing the monitoring result of the second measurement report with the location reference information.

10. A communication system (1), **characterized by** comprising:
a user equipment (30), named UE hereinafter, configured for transmitting a first measurement report, and transmitting a second measurement report, wherein the first measurement report is related to a first network performance measurement of the UE (30) with at least one mobile network, the first measurement report comprises a plurality pieces of first location information (P1) of the UE (30), each of the plurality pieces of first location information (P1) has time information, and the second measurement report is related to a second network performance measurement of the UE (30) with the at least one mobile network; and
a server (100), configured for determining second location information (P2) of the UE (30) according to a monitoring result obtained from the second measurement report, and calibrating the second location information (P2) according to the first location information (P1), wherein the second location information (P2) has time information, and the monitoring result is related to signal transmission condition of the UE (30) in the at least one mobile network, wherein the server (100) is configured to compare the time information of each of the plurality of pieces of first location information (P1) with the time information of the second location information (P2) of the UE (30), and wherein the server (100) is configured to use the first location information (P1) with matched time or closest time information to modify the second location information (P2).

11. The communication system (1) according to claim 10, wherein the server (100) is configured to configure a network configuration of the first network performance measurement, wherein the network configuration comprises a command to enable satellite positioning operation of the UE (30), the first location information (P1) is obtained based on the satellite positioning operation, and the server (100) transmits the network configuration to a cellular core network entity, the first network performance measurement is minimization of drive test of third-generation partnership project, the network configuration further comprises frequency spectrum information, the frequency spectrum information comprises a plurality of frequency spectrums possessed by at least two mobile networks, the frequency spectrums are scanned for the second network performance measurement of the UE (30), and the UE (30) is allowed to register to at least one of its own subscribed mobile network of the at least two mobile networks.

12. The communication system (1) according to claim 11, wherein the server (100) is configured to compare the monitoring results obtained from the first and second measurement reports of the mobile networks at locations corresponding to the first location information (P1) and calibrated second location information (P2).

## Patentansprüche

1. Ein Server (100), der Folgendes aufweist:
einen Kommunikationstransceiver (110), der zum Senden und Empfangen von Signalen konfiguriert ist; und
einen Prozessor (140), der mit dem Kommunikationstransceiver (110) gekoppelt ist, und der Prozessor (140) konfiguriert ist für:
Empfangen eines ersten Messberichts über den Kommunikationstransceiver (110), wobei sich der erste Messbericht auf eine erste Netzleistungsmessung eines Benutzergeräts (30), im Folgenden UE (UE = User Equipment) genannt, mit mindestens einem Mobilfunknetz bezieht, und der erste Messbericht eine Vielzahl von Teilen erster Standortinformationen (P1) des UE (30) aufweist, und jede der Vielzahl von Teilen erster Standortinformationen (P1) Zeitinformationen aufweist;
Empfangen eines zweiten Messberichts über den Kommunikationstransceiver (110), wobei sich der zweite Messbericht auf eine zweite Netzleistungsmessung des UE (30) mit dem mindestens einen Mobilfunknetz bezieht;
Bestimmen einer zweiten Standortinformation (P2) des UE (30) gemäß einem Überwachungsergebnis, das aus dem zweiten Messbericht erhalten wird, wobei die zweite Standortinformation (P2) eine Zeitinformation aufweist und das Überwachungsergebnis sich auf den Signalübertragungszustand des UE (30) in dem mindestens einen Mobilfunknetz bezieht; und
Kalibrieren der zweiten Standortinformation (P2) entsprechend der ersten Standortinformation (P1),
wobei der Prozessor (140) für das Kalibrieren konfiguriert ist durch:
Vergleichen der Zeitinformation jeder der Vielzahl von Teilen erster Standortinformation (P1) mit der Zeitinformation der zweiten Standortinformation (P2) des UE (30); und
Verwenden der ersten Standortinformation (P1) mit übereinstimmender Zeit oder nächstgelegener Zeitinformation, um die zweite Standortinformation (P2) zu ändern.

2. Der Server (100) nach Anspruch 1, wobei der Prozessor (140) konfiguriert ist für:
Konfigurieren einer Netzwerkkonfiguration der ersten Netzwerkleistungsmessung, wobei die Netzwerkkonfiguration einen Befehl zum Aktivieren des Satellitenpositionierungsbetriebs des UE (30) aufweist, die erste Standortinformation (P1) basierend auf dem Satellitenpositionierungsbetrieb erhalten wird, die erste Netzwerkleistungsmessung die Minimierung des Testlaufs des Partnerschaftsprojekts der dritten Generation ist und die Netzwerkkonfiguration von einer zellularen Kernnetzwerkeinheit verwendet wird; und
Übermittlung der Netzkonfiguration durch den Kommunikationstransceiver (110).

3. Der Server (100) nach Anspruch 2, wobei die Netzkonfiguration ferner Frequenzspektrumsinformationen aufweist, die Frequenzspektrumsinformationen eine Vielzahl von Frequenzspektren aufweisen, die von mindestens zwei Mobilfunknetzen besessen werden, die Frequenzspektren für die zweite Netzleistungsmessung des UE (30) gescannt werden und dem UE (30) erlaubt wird, sich bei mindestens einem seiner eigenen abonnierten Mobilfunknetze der mindestens zwei Mobilfunknetze zu registrieren.

4. Der Server (100) nach Anspruch 3, wobei der Prozessor (140) konfiguriert ist für:
Vergleichen der Überwachungsergebnisse, die aus den ersten und zweiten Messberichten der Mobilfunknetze an Standorten erhalten wurden, die den ersten Standortinformationen (P1) und den kalibrierten zweiten Standortinformationen (P2) entsprechen.

5. Der Server (100) nach Anspruch 1, wobei der Prozessor (140) konfiguriert ist für:
Korrelieren von Signalstärken des Überwachungsergebnisses des ersten Messberichts entsprechender Basisstationen mit den ersten Standortinformationen (P1), um Standortreferenzinformationen zu erzeugen; und
Vergleichen des Überwachungsergebnisses des zweiten Messberichts mit der Standortreferenzinformation, um die zweite Standortinformation (P2) des UE (30) zu bestimmen.

6. Ein Positionierungsverfahren, das von einem Server durchgeführt wird, wobei das Positionierungsverfahren auf einem Mobilfunknetz basiert, **dadurch gekennzeichnet, dass** es Folgendes aufweist:
Empfangen eines ersten Messberichts, wobei sich der erste Messbericht auf eine erste Netzleistungsmessung eines Benutzergeräts (30), im Folgenden UE genannt, mit mindestens einem Mobilfunknetz bezieht, und der erste Messbericht eine Vielzahl von Teilen erster Standortinformationen (P1) des UE (30) aufweist, und jede der Vielzahl von Teilen erster Standortinformationen (P1) Zeitinformationen aufweist;
Empfangen eines zweiten Messberichts, wobei sich der zweite Messbericht auf eine zweite Netzleistungsmessung des UE (30) mit dem mindestens einen Mobilfunknetz bezieht;
Bestimmen einer zweiten Standortinformation (P2) des UE (30) gemäß einem Überwachungsergebnis, das aus dem zweiten Messbericht erhalten wird, wobei die zweite Standortinformation (P2) eine Zeitinformation aufweist und das Überwachungsergebnis sich auf den Signalübertragungszustand des UE (30) in dem mindestens einen Mobilfunknetz bezieht; und
Kalibrieren der zweiten Standortinformation (P2) entsprechend der ersten Standortinformation (P1),
wobei der Schritt des Kalibrierens der zweiten Standortinformation (P2) gemäß der ersten Standortinformation (P1) aufweist:
Vergleichen der Zeitinformation der ersten Standortinformation (P1) mit der Zeitinformation der zweiten Standortinformation (P2) des UE (30); und Verwenden der ersten Standortinformation (P1) mit angepasster Zeit oder nächstgelegener Zeitinformation, um die zweite Standortinformation (P2) zu modifizieren.

7. Das auf einem Mobilfunknetz basierende Positionierungsverfahren nach Anspruch 6, das außerdem Folgendes aufweist:
Konfigurieren einer Netzkonfiguration der ersten Netzleistungsmessung, wobei die Netzkonfiguration einen Befehl zum Aktivieren des Satellitenpositionierungsbetriebs des UE (30) aufweist, die erste Standortinformation (P1) auf der Grundlage des Satellitenpositionierungsbetriebs erhalten wird, die erste Netzleistungsmessung die Minimierung des Testlaufs des Partnerschaftsprojekts der dritten Generation ist, die Netzkonfiguration von einer zellularen Kernnetzeinheit verwendet wird, die Netzkonfiguration ferner Frequenzspektrumsinformationen aufweist, die Frequenzspektrumsinformationen eine Vielzahl von Frequenzspektren aufweisen, die von mindestens zwei Mobilfunknetzen besessen werden, die Frequenzspektren für die zweite Netzleistungsmessung des UE (30) abgetastet werden, und dem UE (30) erlaubt wird, sich bei mindestens einem seiner eigenen abonnierten Mobilfunknetze der mindestens zwei Mobilfunknetze zu registrieren.

8. Das auf einem Mobilfunknetz basierende Positionierungsverfahren nach Anspruch 7, das außerdem Folgendes aufweist:
Vergleichen der Überwachungsergebnisse, die aus den ersten und zweiten Messberichten der Mobilfunknetze an Standorten erhalten wurden, die den ersten Standortinformationen (P1) und den kalibrierten zweiten Standortinformationen (P2) entsprechen.

9. Das auf einem Mobilfunknetz basierende Positionierungsverfahren nach Anspruch 6, das außerdem Folgendes aufweist:
Korrelieren von Signalstärken des Überwachungsergebnisses des ersten Messberichts, die Basisstationen entsprechen, mit der ersten Standortinformation (P1), um eine Standortreferenzinformation zu erzeugen, und wobei der Schritt des Bestimmens der zweiten Standortinformation (P2) des UE (30) gemäß dem Überwachungsergebnis, das aus dem zweiten Messbericht erhalten wird, aufweist:
Vergleichen des Überwachungsergebnisses des zweiten Messberichts mit der Standortreferenzinformation.

10. Ein Kommunikationssystem (1), **dadurch gekennzeichnet, dass** es Folgendes aufweist:
ein Benutzergerät (30), im Folgenden UE genannt, das zum Übertragen eines ersten Messberichts und zum Übertragen eines zweiten Messberichts konfiguriert ist, wobei sich der erste Messbericht auf eine erste Netzleistungsmessung des UE (30) mit mindestens einem Mobilfunknetz bezieht, der erste Messbericht eine Vielzahl von Teilen erster Standortinformation (P1) des UE (30) aufweist, wobei jeder der Vielzahl von Teilen erster Standortinformation (P1) eine Zeitinformation aufweist, und sich der zweite Messbericht auf eine zweite Netzleistungsmessung des UE (30) mit dem mindestens einen Mobilfunknetz bezieht; und
einen Server (100), der konfiguriert ist zum Bestimmen einer zweiten Standortinformation (P2) des UE (30) gemäß einem Überwachungsergebnis, das aus dem zweiten Messbericht erhalten wird, und zum Kalibrieren der zweiten Standortinformation (P2) gemäß der ersten Standortinformation (P1), wobei die zweite Standortinformation (P2) eine Zeitinformation aufweist und das Überwachungsergebnis mit dem Signalübertragungszustand des UE (30) in dem mindestens einen Mobilfunknetz in Beziehung steht, wobei der Server (100) so konfiguriert ist, dass er die Zeitinformation jedes der Vielzahl von Teilen erster Standortinformation (P1) mit der Zeitinformation der zweiten Standortinformation (P2) des UE (30) vergleicht, und wobei der Server (100) so konfiguriert ist, dass er die erste Standortinformation (P1) mit angepasster Zeit oder nächstgelegener Zeitinformation verwendet, um die zweite Standortinformation (P2) zu modifizieren.

11. Das Kommunikationssystem (1) nach Anspruch 10, wobei der Server (100) so konfiguriert ist, dass er eine Netzwerkkonfiguration der ersten Netzwerkleistungsmessung konfiguriert, wobei die Netzwerkkonfiguration einen Befehl zum Aktivieren des Satellitenpositionierungsbetriebs des UE (30) aufweist, die erste Standortinformation (P1) auf der Grundlage des Satellitenpositionierungsbetriebs erhalten wird und der Server (100) die Netzwerkkonfiguration an eine zelluläre Kernnetzwerkeinheit überträgt, die erste Netzleistungsmessung die Minimierung des Testlaufs des Partnerschaftsprojekts der dritten Generation ist, die Netzkonfiguration ferner Frequenzspektrumsinformationen aufweist, die Frequenzspektrumsinformationen eine Vielzahl von Frequenzspektren aufweisen, die von mindestens zwei Mobilfunknetzen besessen werden, die Frequenzspektren für die zweite Netzleistungsmessung des UE (30) abgetastet werden, und dem UE (30) erlaubt wird, sich bei mindestens einem seiner eigenen abonnierten Mobilfunknetze der mindestens zwei Mobilfunknetze zu registrieren.

12. Das Kommunikationssystem (1) nach Anspruch 11, wobei der Server (100) so konfiguriert ist, dass er die Überwachungsergebnisse vergleicht, die aus den ersten und zweiten Messberichten der Mobilfunknetze an Standorten erhalten wurden, die den ersten Standortinformationen (P1) und den kalibrierten zweiten Standortinformationen (P2) entsprechen.

## Revendications

1. Serveur (100) comprenant :
un émetteur-récepteur de communication (110), configuré pour transmettre et recevoir des signaux ; et
un processeur (140), couplé à l'émetteur-récepteur de communication (110), et le processeur (140) est configuré pour :
recevoir, par l'intermédiaire de l'émetteur-récepteur de communication (110), un premier rapport de mesure, le premier rapport de mesure étant lié à une première mesure des performances du réseau d'un équipement d'utilisateur (30), appelé ci-après UE, avec au moins un réseau mobile, et le premier rapport de mesure comprenant une pluralité d'informations de première localisation (P1) de l'UE (30), et chacune des informations de première localisation (P1) comportant des informations temporelles ;
recevoir, par l'intermédiaire de l'émetteur-récepteur de communication (110), un deuxième rapport de mesure, le deuxième rapport de mesure étant lié à une deuxième mesure des performances du réseau de l'UE (30) avec l'au moins un réseau mobile ;
déterminer les secondes informations de localisation (P2) de l'UE (30) en fonction d'un résultat de surveillance obtenu à partir du second rapport de mesure, les secondes informations de localisation (P2) comportant des informations temporelles, et le résultat de surveillance étant lié à la condition de transmission du signal de l'UE (30) dans l'au moins un réseau mobile ; et
calibrer les secondes informations de localisation (P2) en fonction des premières informations de localisation (P1),
dans lequel le processeur (140) est configuré pour calibrer en :
comparer les informations temporelles de chaque élément de la pluralité d'informations de première localisation (P1) avec les informations temporelles des informations de seconde localisation (P2) de l'UE (30) ; et
utiliser les premières informations de localisation (P1) avec l'heure correspondante ou l'heure la plus proche pour modifier les secondes informations de localisation (P2).

2. Le serveur (100) selon la revendication 1, dans lequel le processeur (140) est configuré pour :
configurer une configuration de réseau de la première mesure de performance de réseau, dans laquelle la configuration de réseau comprend une commande pour activer l'opération de positionnement par satellite de l'UE (30), la première information de localisation (P1) est obtenue sur la base de l'opération de positionnement par satellite, la première mesure de performance de réseau est la minimisation du test d'entraînement du projet de partenariat de troisième génération, et la configuration de réseau est utilisée par une entité de réseau central cellulaire ; et
transmettre, par l'intermédiaire de l'émetteur-récepteur de communication (110), la configuration du réseau.

3. Le serveur (100) selon la revendication 2, dans lequel la configuration du réseau comprend en outre des informations sur le spectre de fréquences, les informations sur le spectre de fréquences comprenant une pluralité de spectres de fréquences possédés par au moins deux réseaux mobiles, les spectres de fréquences sont analysés pour la deuxième mesure de performance du réseau de l'UE (30), et l'UE (30) est autorisé à s'enregistrer auprès d'au moins un de ses propres réseaux mobiles souscrits parmi les deux réseaux mobiles au moins.

4. Le serveur (100) selon la revendication 3, dans lequel le processeur (140) est configuré pour :
comparer les résultats de surveillance obtenus à partir des premier et deuxième rapports de mesure des réseaux mobiles à des emplacements correspondant aux premières informations de localisation (P1) et aux deuxièmes informations de localisation calibrées (P2).

5. Le serveur (100) selon la revendication **1,** dans lequel le processeur (140) est configuré pour :
corréler les intensités des signaux du résultat de surveillance du premier rapport de mesure des stations de base correspondantes avec les premières informations de localisation (P1), respectivement, afin de générer des informations de référence de localisation ; et
comparer le résultat de la surveillance du deuxième rapport de mesure avec les informations de référence de localisation pour déterminer les deuxièmes informations de localisation (P2) de l'UE (30).

6. Méthode de positionnement exécutée par un serveur, la méthode de positionnement étant basée sur un réseau mobile, **caractérisée par le fait qu'**elle comprend :
réception d'un premier rapport de mesure, le premier rapport de mesure étant lié à une première mesure des performances du réseau d'un équipement d'utilisateur (30), appelé ci-après UE, avec au moins un réseau mobile, et le premier rapport de mesure comprenant plusieurs informations de première localisation (P1) de l'UE (30), et chacune des plusieurs informations de première localisation (P1) étant assortie d'informations temporelles ;
recevoir un deuxième rapport de mesure, le deuxième rapport de mesure étant lié à une deuxième mesure des performances du réseau de l'UE (30) avec l'au moins un réseau mobile ;
déterminer les secondes informations de localisation (P2) de l'UE (30) en fonction d'un résultat de surveillance obtenu à partir du second rapport de mesure, les secondes informations de localisation (P2) comportant des informations temporelles, et le résultat de surveillance étant lié à la condition de transmission du signal de l'UE (30) dans l'au moins un réseau mobile ; et
calibrer les secondes informations de localisation (P2) en fonction des premières informations de localisation (P1),
dans lequel l'étape d'étalonnage des secondes informations de localisation (P2) en fonction des premières informations de localisation (P1) comprend :
comparer les informations temporelles des premières informations de localisation (P1) avec les informations temporelles des secondes informations de localisation (P2) de l'UE (30) ; et utiliser les premières informations de localisation (P1) avec les informations temporelles correspondantes ou les informations temporelles les plus proches pour modifier les secondes informations de localisation (P2).

7. La méthode de positionnement basée sur un réseau mobile selon la revendication 6, comprenant en outre :
configurer une configuration de réseau de la première mesure de performance de réseau, dans laquelle la configuration de réseau comprend une commande pour activer l'opération de positionnement par satellite de l'UE (30), la première information de localisation (P1) est obtenue sur la base de l'opération de positionnement par satellite, la première mesure de performance de réseau est la minimisation du test d'entraînement du projet de partenariat de troisième génération, la configuration de réseau est utilisée par une entité de réseau central cellulaire, la configuration du réseau comprend en outre des informations sur le spectre de fréquences, les informations sur le spectre de fréquences comprennent une pluralité de spectres de fréquences possédés par au moins deux réseaux mobiles, les spectres de fréquences sont analysés pour la deuxième mesure de performance du réseau de l'UE (30), et l'UE (30) est autorisé à s'enregistrer sur au moins un de ses propres réseaux mobiles souscrits parmi les au moins deux réseaux mobiles.

8. La méthode de positionnement basée sur un réseau mobile selon la revendication 7, comprenant en outre :
comparer les résultats de la surveillance obtenus à partir des premier et deuxième rapports de mesure des réseaux mobiles à des emplacements correspondant aux premières informations de localisation (P1) et aux secondes informations de localisation calibrées (P2).

9. La méthode de positionnement basée sur un réseau mobile selon la revendication 6, comprenant en outre :
corréler les intensités des signaux du résultat de surveillance du premier rapport de mesure correspondant aux stations de base avec les premières informations de localisation (P1), respectivement, pour générer des informations de référence de localisation, et dans lequel l'étape de détermination des secondes informations de localisation (P2) de l'UE (30) en fonction du résultat de surveillance obtenu à partir du second rapport de mesure comprend :
comparer le résultat de la surveillance du deuxième rapport de mesure avec les informations de référence de l'emplacement.

10. Système de communication (1), **caractérisé par le fait qu'**il comprend :
un équipement utilisateur (30), ci-après dénommé UE, configuré pour transmettre un premier rapport de mesure et un second rapport de mesure, le premier rapport de mesure étant lié à une première mesure des performances du réseau de l'UE (30) avec au moins un réseau mobile, le premier rapport de mesure comprenant une pluralité d'informations de première localisation (P1) de l'UE (30), chacune des informations de première localisation (P1) comportant des informations temporelles, et le second rapport de mesure étant lié à une seconde mesure des performances du réseau de l'UE (30) avec au moins un réseau mobile ; et
un serveur (100), configuré pour déterminer les secondes informations de localisation (P2) de l'UE (30) en fonction d'un résultat de surveillance obtenu à partir du second rapport de mesure, et pour calibrer les secondes informations de localisation (P2) en fonction des premières informations de localisation (P1), les secondes informations de localisation (P2) comportant des informations temporelles, et le résultat de surveillance étant lié à la condition de transmission du signal de l'UE (30) dans l'au moins un réseau mobile, le serveur (100) est configuré pour comparer les informations temporelles de chacune des informations de première localisation (P1) avec les informations temporelles des informations de seconde localisation (P2) de l'UE (30), et le serveur (100) est configuré pour utiliser les informations de première localisation (P1) avec les informations temporelles correspondantes ou les informations temporelles les plus proches pour modifier les informations de seconde localisation (P2).

11. Le système de communication (1) selon la revendication 10, dans lequel le serveur (100) est configuré pour configurer une configuration de réseau de la première mesure de performance de réseau, dans lequel la configuration de réseau comprend une commande pour activer l'opération de positionnement par satellite de l'UE (30), la première information de localisation (P1) est obtenue sur la base de l'opération de positionnement par satellite, et le serveur (100) transmet la configuration de réseau à une entité de réseau central cellulaire, la première mesure de performance du réseau est la minimisation du test de conduite du projet de partenariat de troisième génération, la configuration du réseau comprend en outre des informations sur le spectre de fréquences, les informations sur le spectre de fréquences comprennent une pluralité de spectres de fréquences possédés par au moins deux réseaux mobiles, les spectres de fréquences sont analysés pour la deuxième mesure de performance du réseau de l'UE (30), et l'UE (30) est autorisé à s'inscrire à au moins un de ses propres réseaux mobiles souscrits parmi les au moins deux réseaux mobiles.

12. Le système de communication (1) selon la revendication **11,** dans lequel le serveur (100) est configuré pour comparer les résultats de surveillance obtenus à partir des premier et deuxième rapports de mesure des réseaux mobiles à des emplacements correspondant aux premières informations de localisation (P1) et aux secondes informations de localisation calibrées (P2).
